# NEW EUROPEAN PATENT SPECIFICATION

(11) **EP 2 095 723 B2**
(45) Date of publication and mention of the opposition decision: **11.08.2021**
(45) Mention of the grant of the patent: 12.09.2012
(21) Application number: 09003473.7
(22) Date of filing: 23.09.2005
(51) Int. Cl.: A23K 1/18, B65D 21/02, B65D 85/72

(54) **More appealing packaged pet food products**
Ansprechendere verpackte Tierfutterprodukte
Produits alimentaires emballés pour animaux plus appétissants

(30) Priority: 27.09.2004 US 614008 P
(43) Date of publication of application: 02.09.2009
(62) Divisional of application: 05800284.1
(73) Proprietor: Société des Produits Nestlé S.A., 1800 Vevey (CH)
(72) Inventor: Bennett, Harold, Castiac, CA 91384-3584 (US); Etheridge, Gay, Brentwood, Missouri 63144 (US); Krueger, Nina Leigh, St. Louis, MO 63111 (US); Rayner, Jean Luz, St. Joseph, MO 64507 (US)
(74) Representative: Rupp, Christian

(56) References cited:
- WO-A1-03/069242
- WO-A1-2005/018312
- CA-A1- 2 354 716
- DE-A1- 3 447 558
- US-A- 4 113 095
- US-A- 4 276 311
- US-A- 5 377 860
- US-A- 5 419 451
- US-A1- 2003 062 365
- US-A1- 2004 134 911
- US-B1- 6 761 279

## Description

### BACKGROUND

The present invention is directed to a stackable container system for pet food products.

Pets often prefer foods that are eaten by their owners over commercial pet foods. Pets typically derive a high level of satisfaction from consuming human foods even including table scraps. As a result, pet owners frequently give their pets table scraps even though most table scraps are not nutritionally complete foods for companion animals. In some cases pet owners prefer to feed their pets human foods rather than pet foods because of the foul smelling odor that often accompanies commercial pet foods.

There is also a need for more convenient containers for storing pet foods that will facilitate their storage, will not interfere with shelf life and that can provide for reuse in the event that only part of a meal is consumed by a pet.

Thus, new pet food products are needed that can provide a high level of eating satisfaction for companion animals and that also have a high nutritional and caloric value, providing all the constituents of a balanced diet for pet animals. Novel storage containers for these products that provide for more convenient and attractive storage and that are more easily used and easily reused are also needed.

Stackable containers for foods are known from e.g., US 2003/062 365 and US 5 419 451.

### SUMMARY

The present invention is defined by the claims and provides a unique packaging or container system that provides an attractive appearance while holding the pet food and is stackable. The packaging or container system has one or more portions that are partially or entirely translucent or transparent. Further, the container system can be constructed from compounds that will protect the food product from harmful ultraviolet light. The container can also be retortable.

The stackable container has an easily removable, resealable lid which has a plurality of step down grooves which act to hold the lid level and to take up play between the lid and the container body.

In an embodiment, the outer circumference of the lid can be larger than the outer circumference of the container body.

In an embodiment, the container body can have one or more reliefs cut into a tab at a corner of the container body.

In an embodiment, the one or more reliefs are cut into tabs at opposing corners of the container body.

In an embodiment, the lid can have at least one step down groove towards the heat seal of the lid stock.

The present invention provides a container system for pet foods which comprises an easily removable, resealable lid and a container body defining an interior for receiving pet food, the container body having one or more portions that is selected from the group consisting of translucent, transparent and combinations thereof, wherein the container system is stackable, characterised in that the resealable lid has a plurality of step down grooves.

In an embodiment, the entire container body is transparent or translucent or a combination thereof

In an embodiment, the container is retortable.

In an embodiment, the container system further comprises a pet food product.

In an embodiment, the pet food product is visible through one or more portions of the container body.

In an embodiment, the container system comprises a label surrounding the container body, wherein the label has opaque portions and transparent portions.

In an embodiment, the lid is adapted to support the container.

In an embodiment, the lid includes at least one groove.

In an embodiment, the outer circumference of the lid is larger than the outer circumference of the container body.

In an embodiment, the container body has one or more reliefs cut into a tab at a corner of the container body.

In an embodiment, the container body has one or more reliefs cut into tabs at opposing corners of the container body.

In an embodiment, the container body is so constructed and arranged as to reduce or completely eliminate UV light from reaching the interior of the container system.

An advantage of the present invention present invention is to provide an improved pet food product that is aesthetically appealing.

Another advantage of the present invention is to provide an visually appealing pet food product within a transparent container.

Additional features and advantages are described herein, and will be apparent from, the following Detailed Description and the figures.

### BRIEF DESCRIPTION OF THE FIGURES

Figure 1 is a perspective view of the pet food container system including the lid and the container body in one embodiment of the present invention.

Figure 2 is a perspective view of the container body in an embodiment which however does not comprise any step down groove on the resealable lid.

Figure 3 is a perspective view of the container body including a foil cover in an embodiment which however does not comprise any step down groove on the resealable lid.

Figure 4 is a top view of the lid in one embodiment of the present invention.

Figure 5 is a top view of the container body in one embodiment which however does not comprise any step down groove on the resealable lid.

Figure 6 is a perspective view of the bottom side of the container body in one embodiment of the present invention.

Figure 7 is a side view of two stacked pet food container systems in one embodiment of the present invention.

Figure 8 is an end view of two stacked pet food container systems in one embodiment of the present invention.

### DETAILED DESCRIPTION

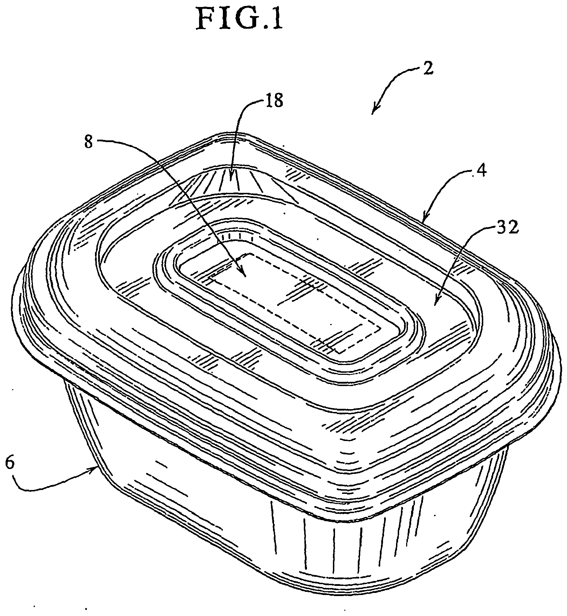

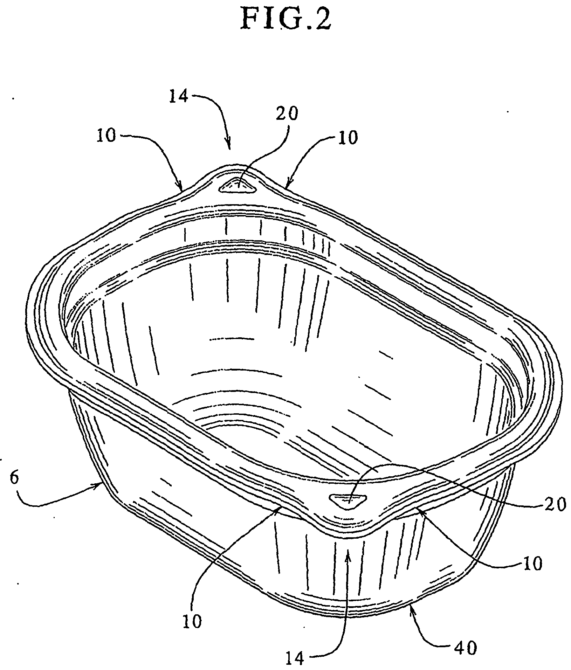

In an embodiment illustrated in Fig. 1, the present invention provides an attractive and functional packaging or container system 2 for the pet food product. For example, the container system 2 comprises an easily removable, resealable lid 4 and a vessel or container body 6. The lid 4 and container body 6 can be made of any material suitable for storing pet food products, but is preferably made of plastic, which has a clean modern looking appearance. Many plastic materials are known in the art and can be used. In another embodiment, the lid 2 can contain information 8 regarding a product such as, for example, the brand of the pet food product. Fig. 2 presents a container system which does not comprise all the features of the present invention.

It should be appreciated that the container system 2 can have any suitable shape that will allow pets to consume the food from the interior. For example, suitable shapes include circular, oval, square, rectangular or other asymmetric shapes.

Suitable containers systems 2 can have a lid 4 and a container body 6 that contain the pet food product in a substantially airtight form so that the aroma and flavor of the product is not released upon storage until after the lid 4 is removed. The container systems 2 comprise one or more portions that are clear, translucent or transparent material (e.g. plastic) such that the product can be visible through the walls of the container system 2. The entire container system 2 or portions of the container system 2 can be transparent, translucent or combinations thereof. For example, the entire container body 6 and lid 4 or portions of the container body 6 and lid 4 can be transparent or translucent.

The container bodies 6 are configured such that the lid 4 can be removed and the pet food can then be consumed from the center of the container body 6. In preferred embodiments, the container system 2 is resealable by positioning the lid 4 on to the container body 6. In alternative embodiments, the container system 2 so constructed and arranged to be retortable for convenient processing and manufacturing of the food product.

The container system 2 can so constructed and arranged for reducing or blocking/eliminating ultraviolet light (UV) which protects the food product from fading or losing color over time as the package is exposed to fluorescent lighting in stores. It should be appreciated that reducing the UV can be understood to mean any amount of reduction in UV through the container system 2 (e.g. a difference between the UV outside container and UV inside container). For example, a UV inhibitor can be included as an additive blend in the plastic polymer of the container system 2 to absorb/reflect UV light. In some embodiments either the lid 4, the container body 6 or both the lid 4 and container body 6 are thermoformed and capable of reducing or eliminating UV.

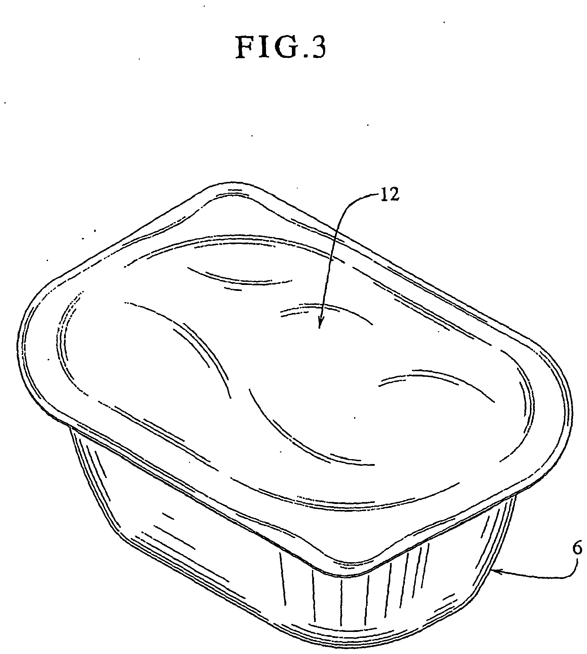

In an embodiment illustrated in Fig. 3 (not part of the present invention), the opening of the container body 6 is covered with a foil or seal 12 that provides an air tight cover for the container body 6, for example, when the pet food is initially packaged to prevent contamination during storage. The foil or seal 12 covers the container body 6 opening and the lid 4 can be placed over the foil 12. Once a consumer removes the foil 12, the lid 4 can be used to cover the container body 6 for further storage.

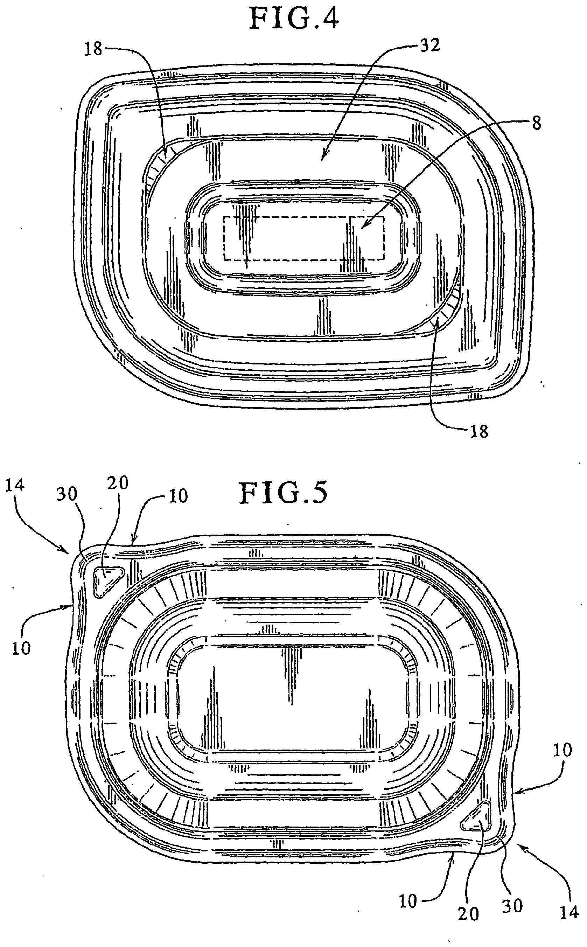

As illustrated in Fig. 4, the lid 4 is configured with a plurality of step down grooves 18, for example, towards the heat seal of the lid 4 stock. This unique feature was previously avoided because of the potential for interference with flexible lid 4 stock. However the interference is utilized to hold the snap-on lid 4 level and to take up play in the snap fit between the lid 4 and container body 6. Ultimately, this provides a clean neatly presenting package that is easier to open.

In an embodiment illustrated in Fig. 5 (not part of the present invention), the container body 6 can have one or more reliefs 10 cut into or near two opposing corners 14 of the container body 6. For example, the reliefs 10 can facilitate removal of the lid 4 from the container body 6. Such a configuration is unique in that although the lid 4 can be easily opened the configuration does not disrupt the holding power of the snap-on lid 4 which force is primarily derived diagonally across the lid 4 from opposing corners.

In certain embodiments, the container body 6 includes one or more thumb indents 20 in the container body corners 14. For example, these indents 20 when depressed cause the foil covering 12 to raise up and provide an easier finger hold for removal of the foil 12. In another embodiment, the container body 6 includes one or more textured, thumb tapered areas or tabs 30 to allow, for example the consumer to conveniently lift or hinge open the lid 4.

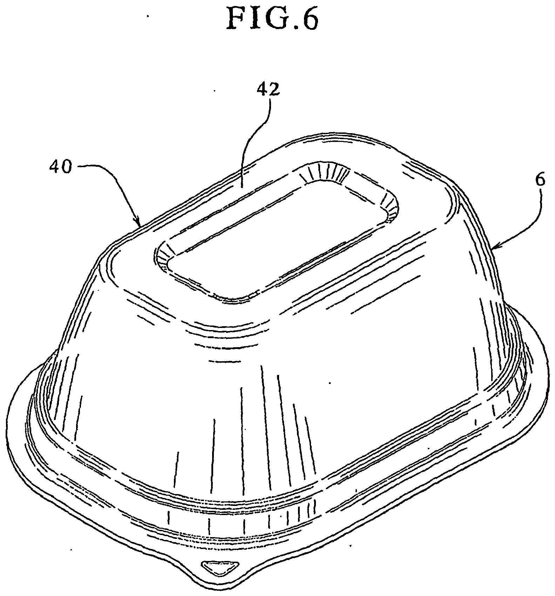

In alternative embodiments, the lid 4 and the bottom 40 of the container body 6 can also be adapted with stabilizing or interlocking features. For example, the lid 4 can include one or more indentations or grooves 32 so that the lid 4 and bottom 40 of the container can be placed together in a mated and more stabilized configuration. Further, as illustrated in Fig. 6, the bottom 40 of the container body 6 can contain stacking shoulders 42 which can fit, for example, into the grooves 32 in the lid 4. Optionally, the stacking shoulders 42 can contain a back draft. It should be appreciated that the grooves 32 of the lid 4 and the stacking shoulders 42 of the container body 6 can be arranged in a variety of forms and designs to allow for a mated and stabilized stacking configuration of the container systems 2.

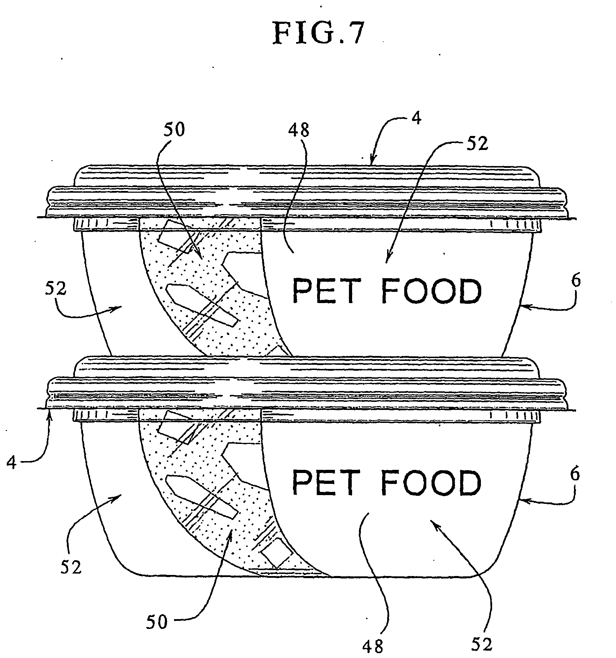

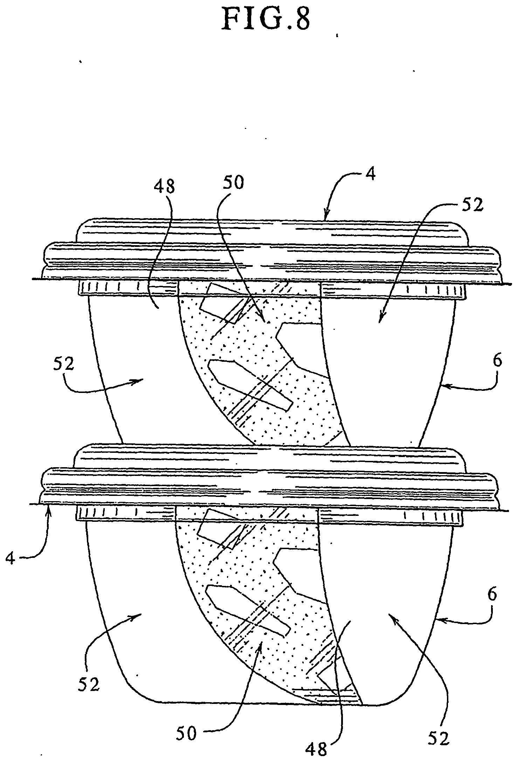

In certain embodiments illustrated in Figs. 7-8, the lid 4 is configured such that the container body 6 can rest securely on the lid 4. This feature provides two advantages to the containers. First two or more containers 2 can be stacked for storage. In addition, this feature allows the lid 4 to be placed on a flat surface and used as a tray after being removed from the container body. For example, the tray is used to support the container body 6 which rests upon it. In this configuration the tray can catch pet food that spills from the container as the food is being eaten. In certain embodiments the lid 4 has an outer circumference that is larger than the outer circumference of the container body so that the lid 4 has an increased chance of collecting spilled food.

In another embodiment illustrated in Figs. 7-8, the container body 6 can include a label 48 that has one or more transparent portions 50 and one or more opaque portions 52. The opaque portions 52 of the label 48 can include, for example, aesthetic illustrations, trademarks, and other relevant labeling information. The transparent portions 50 can provide an area where, for example, the unique pet food arrangement is visible through the container body 6 and the label 48. It should be appreciated that the transparent portions 50 and the opaque portions 52 can be arranged in any suitable form, shape or design as part of the label 48.

The container body 6 has a size that is suitable for providing a meal to a pet. Thus, the container size can vary depending upon the dietary requirements of the pet to be fed. In certain embodiments the container has an internal volume of about 300 mL.

## Claims

1. A stackable container system for pet foods, the container system comprising an easily removable, resealable lid and a container body defining an interior for receiving pet food, the container body having one or more portions selected from the group consisting of translucent and transparent portions or combinations thereof, **characterised in that** the resealable lid has a plurality of step down grooves, which act to hold the lid level and to take up play in the snap fit between the lid and the container body.

2. A container system according to claim 1, **characterised in that** the container body has at least one relief cut into a tab at the corner of the container body.

3. A container system according to claim 2, in which the container body has at least one relief cut into tabs at opposing corners of the container body.

4. A container system according to any one of the preceding claims, **characterised in that** the container system is retortable.

5. A container system according to any one of the preceding claims, **characterised in that** the outer circumference of the resealable lid is larger than the outer circumference of the container body, the lid being adapted to support the container.

6. A container system according to any one of the preceding claims, **characterised in that** the container body includes one or more thumb indents in the container body corners.

7. A container system according to any one of the preceding claims, **characterised in that** the lid and the body include complementary stabilising or interlocking features.

8. A container system according to any one of the preceding claims, wherein the container system includes a pet food and further comprises a foil covering the container body to prevent contamination of the pet food during storage.

9. A container system according to any one of the preceding claims, which further comprises a pet food product.

10. A container system according to claim 9, wherein the pet food product is visible through at least one portion of the container body.

11. A container system according to claim 9 or claim 10, which further comprises a label surrounding the container body, the label having opaque portions and transparent portions.

12. A method for providing a pet food having increased consumer appeal comprising placing a pet food into a container system according to any one of claims 1 to 11.

## Patentansprüche

1. Stapelbares Behältersystem für Haustierfutter, wobei das Behältersystem einen leicht entfernbaren, wiederverschließbaren Deckel und einen Behälterkörper umfasst, der einen Innenraum zum Aufnehmen von Haustierfutter definiert, wobei der Behälterkörper einen oder mehrere Abschnitte aufweist, die ausgewählt sind aus der Gruppe bestehend aus transluzenten und transparenten Abschnitten oder Kombinationen davon, **dadurch gekennzeichnet, dass** der wiederverschließbare Deckel eine Vielzahl von stufig nach unten gehenden Aussparungen aufweist, die wirken, um den Deckel eben zu halten und um Spiel in der Schnappverbindung zwischen dem Deckel und dem Behälterkörper aufzunehmen.

2. Behältersystem nach Anspruch 1, **dadurch gekennzeichnet, dass** der Behälterkörper mindestens ein Relief aufweist, das in eine Lasche an der Ecke des Behälterkörpers geschnitten ist.

3. Behältersystem nach Anspruch 2, in dem der Behälterkörper mindestens ein Relief aufweist, das in Laschen an gegenüberliegenden Ecken des Behälterkörpers geschnitten ist.

4. Behältersystem nach einem der vorstehenden Ansprüche, **dadurch gekennzeichnet, dass** das Behältersystem sterilisierbar ist.

5. Behältersystem nach einem der vorstehenden Ansprüche, **dadurch gekennzeichnet, dass** der Außenumfang des wiederverschließbaren Deckels größer als der Außenumfang des Behälterkörpers ist, wobei der Deckel dazu ausgelegt ist, den Behälter zu tragen.

6. Behältersystem nach einem der vorstehenden Ansprüche, **dadurch gekennzeichnet, dass** der Behälterkörper eine oder mehrere Daumeneinbeulungen in den Behälterkörperecken einschließt.

7. Behältersystem nach einem der vorstehenden Ansprüche, **dadurch gekennzeichnet, dass** der Deckel und der Körper komplementäre Stabilisierungs- oder Verriegelungsmerkmale einschließen.

8. Behältersystem nach einem der vorstehenden Ansprüche, wobei das Behältersystem ein Haustierfutter einschließt und ferner eine Folie umfasst, die den Behälterkörper bedeckt, um Kontamination des Haustierfutters während Lagerung zu verhindern.

9. Behältersystem nach einem der vorstehenden Ansprüche, das ferner ein Haustierfutterprodukt umfasst.

10. Behältersystem nach Anspruch 9, wobei das Haustierfutterprodukt durch mindestens einen Abschnitt des Behälterkörpers sichtbar ist.

11. Behältersystem nach Anspruch 9 oder Anspruch 10, das ferner ein Etikett umfasst, das den Behälterkörper umgibt, wobei das Etikett opake Abschnitte und transparente Abschnitte aufweist.

12. Verfahren zum Bereitstellen eines Haustierfutters mit erhöhtem Verbraucheranklang, umfassend das Platzieren eines Haustierfutters in ein Behältersystem nach einem der Ansprüche 1 bis 11.

## Revendications

1. Système de récipient empilable pour aliments pour animal de compagnie, le système de récipient comprenant un couvercle refermable, facile à enlever, et un corps de récipient définissant un intérieur pour recevoir un aliment pour animal de compagnie, le corps de récipient ayant une ou plusieurs parties choisies dans le groupe constitué de parties translucides et transparentes ou de combinaisons de celles-ci, **caractérisé en ce que** le couvercle refermable a une pluralité de rainures étagées descendantes, qui servent à maintenir le couvercle de niveau et à rattraper le jeu dans l'ajustement encliquetable entre le couvercle et le corps de récipient.

2. Système de récipient selon la revendication 1, **caractérisé en ce que** le corps de récipient a au moins une découpe en relief dans une languette au niveau du coin du corps de récipient.

3. Système de récipient selon la revendication 2, dans lequel le corps de récipient a au moins une découpe en relief dans des languettes au niveau de coins opposés du corps de récipient.

4. Système de récipient selon l'une quelconque des revendications précédentes, **caractérisé en ce que** le système de récipient est stérilisable en autoclave.

5. Système de récipient selon l'une quelconque des revendications précédentes, **caractérisé en ce que** la circonférence externe du couvercle refermable est plus grande que la circonférence externe du corps de récipient, le couvercle étant conçu pour supporter le récipient.

6. Système de récipient selon l'une quelconque des revendications précédentes, **caractérisé en ce que** le corps de récipient inclut un ou plusieurs renfoncements pour le pouce dans les coins de corps de récipient.

7. Système de récipient selon l'une quelconque des revendications précédentes, **caractérisé en ce que** le couvercle et le corps incluent des caractéristiques complémentaires de stabilisation ou d'emboîtement.

8. Système de récipient selon l'une quelconque des revendications précédentes, dans lequel le système de récipient inclut un aliment pour animal de compagnie et comprend en outre une pellicule couvrant le corps de récipient pour empêcher une contamination de l'aliment pour animal de compagnie pendant le stockage.

9. Système de récipient selon l'une quelconque des revendications précédentes, qui comprend en outre un produit alimentaire pour animal de compagnie.

10. Système de récipient selon la revendication 9, dans lequel le produit alimentaire pour animal de compagnie est visible à travers au moins une partie du corps de récipient.

11. Système de récipient selon la revendication 9 ou la revendication 10, qui comprend en outre une étiquette entourant le corps de récipient, l'étiquette ayant des parties opaques et des parties transparentes.

12. Procédé pour fournir un aliment pour animal de compagnie ayant un attrait accru pour le consommateur comprenant la mise en place d'un aliment pour animal de compagnie dans un système de récipient selon l'une quelconque des revendications 1 à 11.
